(19) **Europäisches Patentamt / European Patent Office / Office européen des brevets**

(11) **EP 3 232 630 A1**

(12) **EUROPEAN PATENT APPLICATION**
published in accordance with Art. 153(4) EPC

(43) Date of publication:
**18.10.2017 Bulletin 2017/42**

(21) Application number: **14909402.1**

(22) Date of filing: **30.12.2014**

(51) Int Cl.:
***H04L 29/06*** *(2006.01)*

(86) International application number:
**PCT/CN2014/095639**

(87) International publication number:
**WO 2016/106591 (07.07.2016 Gazette 2016/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
- **FU, Tianfu**
  **Shenzhen**
  **Guangdong 518129 (CN)**
- **ZHOU, Chong**
  **Shenzhen**
  **Guangdong 518129 (CN)**
- **ZHANG, Yibo**
  **Shenzhen**
  **Guangdong 51812 (CN)**

(74) Representative: **Gill Jennings & Every LLP**
**The Broadgate Tower**
**20 Primrose Street**
**London EC2A 2ES (GB)**

(54) **METHOD AND DEVICE FOR DATA PACKET EXTRACTION**

(57)     Embodiments of the present invention provide a data packet extraction method and apparatus. Two hash values calculated based on quintuple information of different data packets of a same session are the same, that is, two calculated remainders are also the same at a same sampling ratio. When one remainder of the two calculated remainders is a preset sampling remainder, all the data packets in a network that belong to the session are extracted, so as to implement data packet extraction based on a session. When the quintuple information of the different data packets of the same session matches the first mapping table, either all the data packets of the same session can match the first mapping table, or none of the data packets of the same session can match the first mapping table, so as to implement data packet extraction based on a session.

FIG. 1

**Description**

**TECHNICAL FIELD**

The present invention relates to the field of communications technologies, and in particular, to a data packet extraction method and apparatus.

**BACKGROUND**

In the field of communications technologies, data information is exchanged and transmitted between different network devices in basic units of data packets. When transmitting data information, a network device adds a packet header to the data information that needs to be transmitted, so as to encapsulate the data information into a data packet for transmission. When the data information that needs to be transmitted is being encapsulated, the added packet header carries quintuple information. The quintuple information includes a source Internet Protocol IP address, a destination IP address, a source port number, a destination port number, and a transport layer protocol number.

When a transmission status of data information in a network is being analyzed, sampling analysis is performed on a data packet transmitted in the network. Generally, a time packet in the network is sampled in basic sampling units of data streams. Quintuple information of multiple data packets that belong to a same data stream is the same, that is, source IP addresses are the same, destination IP addresses are the same, source port numbers are the same, destination port numbers are the same, and transport layer protocol numbers are the same.

A data packet collected in basic units of data streams may be used to analyze duration of a data stream in a network, a packet length of the data stream in the network, and information such as an IP address of the data stream in the network. However, if a data packet extracted based on a data stream is analyzed, a transmission status of only a part of data in a network can be obtained by means of analysis.

**SUMMARY**

A technical problem to be resolved by embodiments of the present invention is to provide a data packet extraction method and apparatus, so to resolve a technical problem.

A first aspect of the embodiments of the present invention provides a data packet extraction method, where the method includes:

> receiving a data packet;
> parsing quintuple information of the data packet;
> calculating a first hash value and a second hash value of the data packet according to the quintuple information by using a first hash function, where the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged;
> calculating a first remainder obtained by dividing the first hash value by a denominator of a preset session sampling ratio, and calculating a second remainder obtained by dividing the second hash value by the denominator of the preset session sampling ratio;
> querying whether the first remainder or the second remainder is a preset sampling remainder, where a quantity of the preset sampling remainders is the same as a numerator value of the preset sampling ratio; and
> extracting the data packet when the first remainder or the second remainder is the preset sampling remainder.

In a first possible implementation manner of the first aspect of the embodiments of the present invention, before the extracting the data packet, the method further includes:

> extracting at least one preset feature field from the data packet, where the preset feature field is a character string of a preset offset length at a preset position in the data packet;
> calculating a feature hash value of each preset feature field by using the second hash function and by using the preset feature field as an input;
> querying whether the feature hash value of each preset feature field is the same as a preset hash value of the preset feature field; and
> extracting the data packet when the feature hash value of each preset feature field is the same as the preset hash value of the preset feature field.

A second aspect of the embodiments of the present invention provides a data packet extraction method, where the method includes:

receiving a data packet;
parsing quintuple information of the data packet;
determining whether another data packet belonging to a session to which the data packet belongs has been received; and
when another data packet belonging to the session to which the data packet belongs has not been received, determining that the session to which the data packet belongs is a newly received session, adding 1 to a session count value, and determining whether the session count value is equal to a preset threshold; and when the session count value is equal to the preset threshold, determining that the data packet belongs to a newly recognized to-be-sampled session, extracting the data packet, and updating a first mapping table by using the quintuple information of the data packet; or when another data packet belonging to the session to which the data packet belongs has been received, determining that the session to which the data packet belongs is a received session, and determining whether the quintuple information of the data packet matches the first mapping table; and extracting the data packet when the quintuple information of the data packet matches the first mapping table, where the first mapping table stores quintuple information of all to-be-sampled sessions that are recognized before the data packet is received or a Bloom Filter mapping element that uses, as an input, quintuple information of all to-be-sampled sessions that are recognized before the data packet is received.

In a second possible implementation manner of the second aspect of the embodiments of the present invention, the determining whether another data packet belonging to a session to which the data packet belongs has been received includes:

parsing a flag field carried in the data packet;
determining whether the flag field is an SYN flag field; and
when the flag field is the SYN flag field, determining that another data packet belonging to the session to which the data packet belongs has not been received; or when the flag field is not the SYN flag field, determining that another data packet belonging to the session to which the data packet belongs has been received.

In a third possible implementation manner of the second aspect of the embodiments of the present invention, the determining whether another data packet belonging to a session to which the data packet belongs has been received includes:

determining whether the quintuple information of the data packet matches a second mapping table, where the second mapping table stores quintuple information of all sessions that are received before the data packet is received or a Bloom Filter mapping element that uses, as an input, quintuple information of all sessions that are received before the data packet is received; and
when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

With reference to the second aspect of the embodiments of the present invention to the third possible implementation manner of the second aspect, in a fourth possible implementation manner, the first mapping table stores the Bloom Filter mapping element that uses, as an input, the quintuple information of all the to-be-sampled sessions that are recognized before the data packet is received; and
the determining whether the quintuple information of the data packet matches the first mapping table includes:

using, as a first hash value group, multiple hash values that are calculated by using a preset hash function group and by using, as an input, the quintuple information that is of the data packet and arranged in a preset order, where the preset hash function group is a hash function group used when the first mapping table is generated, and includes multiple preset hash functions;
querying whether values at positions in the first mapping table that are corresponding to all hash values in the first hash value group are 1; and
when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;

querying, from the first mapping table, whether values at positions corresponding to all hash values in the second hash value group are 1; and

when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

With reference to the second aspect of the embodiments of the present invention to the fourth possible implementation manner of the second aspect, in a fifth possible implementation manner,
the first mapping table stores the Bloom Filter mapping element that uses, as an input, the quintuple information of all the to-be-sampled sessions that are recognized before the data packet is received; and
the updating a first mapping table by using the quintuple information of the data packet includes:

using, as a third hash value group, multiple hash values that are calculated by using the preset hash function group and by using, as an input, the quintuple information that is of the data packet and arranged in the preset order; and
setting values at positions in the first mapping table that are corresponding to all hash values in the third hash value group to 1.

A third aspect of the embodiments of the present invention provides a data packet extraction apparatus, where the apparatus includes:

a receiving unit and a processing unit connected to the receiving unit, where
the receiving unit is configured to receive a data packet and send the data packet to the processing unit; and
the processing unit is configured to: parse quintuple information of the data packet;
calculate a first hash value and a second hash value of the data packet according to the quintuple information by using a first hash function, where the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged;
calculate a first remainder obtained by dividing the first hash value by a denominator of a preset session sampling ratio, and calculate a second remainder obtained by dividing the second hash value by the denominator of the preset session sampling ratio;
query whether the first remainder or the second remainder is a preset sampling remainder, where a quantity of the preset sampling remainders is the same as a numerator value of the preset sampling ratio; and
extract the data packet when the first remainder or the second remainder is the preset sampling remainder.

In a first possible implementation manner of the third aspect of the embodiments of the present invention, before extracting the data packet, the processing unit is further configured to:

extract at least one preset feature field from the data packet, where the preset feature field is a character string of a preset offset length at a preset position in the data packet;
calculate a feature hash value of each preset feature field by using the second hash function and by using the preset feature field as an input;
query whether the feature hash value of each preset feature field is the same as a preset hash value of the preset feature field; and
extract the data packet when the feature hash value of each preset feature field is the same as the preset hash value of the preset feature field.

A fourth aspect of the embodiments of the present invention provides a data packet extraction apparatus, where the apparatus includes:

a receiving unit and a processing unit connected to the receiving unit, where
the receiving unit is configured to receive a data packet and send the data packet to the processing unit; and
the processing unit is configured to: parse quintuple information of the data packet;

determine whether another data packet belonging to a session to which the data packet belongs has been received; and
when another data packet belonging to the session to which the data packet belongs has not been received, determine that the session to which the data packet belongs is a newly received session, add 1 to a session count value, and determine whether the session count value is equal to a preset threshold; and when the session count value is equal to the preset threshold, determine that the data packet belongs to a newly recognized to-be-sampled session, extract the data packet, and update a first mapping table by using the quintuple information of the data packet; or when another data packet belonging to the session to which the data packet belongs has been received, determine that the session to which the data packet belongs is a received session, and determine whether the quintuple information of the data packet matches the first mapping table; and extract the data packet when the quintuple information of the data packet matches the first mapping table, where the first mapping table stores quintuple information of all to-be-sampled sessions that are recognized before the data packet is received or a Bloom Filter mapping element that uses, as an input, quintuple information of all to-be-sampled sessions that are recognized before the data packet is received.

In a first possible implementation manner of the fourth aspect of the embodiments of the present invention, that the processing unit is configured to determine whether another data packet belonging to a session to which the data packet belongs has been received includes:

parsing a flag field carried in the data packet;
determining whether the flag field is an SYN flag field; and
when the flag field is the SYN flag field, determining that another data packet belonging to the session to which the data packet belongs has not been received; or when the flag field is not the SYN flag field, determining that another data packet belonging to the session to which the data packet belongs has been received.

In a second possible implementation manner of the fourth aspect of the embodiments of the present invention, that the processing unit is configured to determine whether another data packet belonging to a session to which the data packet belongs has been received includes:

determining whether the quintuple information of the data packet matches a second mapping table, where the second mapping table stores quintuple information of all sessions that are received before the data packet is received or a Bloom Filter mapping element that uses, as an input, quintuple information of all sessions that are received before the data packet is received; and
when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

With reference to the fourth aspect of the embodiments of the present invention to the second possible implementation manner of the fourth aspect, in a third possible implementation manner, the first mapping table stores the Bloom Filter mapping element that uses, as an input, the quintuple information of all the to-be-sampled sessions that are recognized before the data packet is received; and
that the processing unit is configured to determine whether the quintuple information of the data packet matches the first mapping table includes:

using, as a first hash value group, multiple hash values that are calculated by using a preset hash function group and by using, as an input, the quintuple information that is of the data packet and arranged in a preset order, where the preset hash function group is a hash function group used when the first mapping table is generated, and includes multiple preset hash functions;
querying whether values at positions in the first mapping table that are corresponding to all hash values in the first hash value group are 1; and
when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;

querying, from the first mapping table, whether values at positions corresponding to all hash values in the second hash value group are 1; and

when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

With reference to the fourth aspect of the embodiments of the present invention to the third possible implementation manner of the fourth aspect, in a fourth possible implementation manner, the first mapping table stores the Bloom Filter mapping element that uses, as an input, the quintuple information of all the to-be-sampled sessions that are recognized before the data packet is received; and

that the processing unit is configured to update a first mapping table by using the quintuple information of the data packet includes:

using, as a third hash value group, multiple hash values that are calculated by using the preset hash function group and by using, as an input, the quintuple information that is of the data packet and arranged in the preset order; and setting values at positions in the first mapping table that are corresponding to all hash values in the third hash value group to 1.

It can be learned from the foregoing technical solutions that the embodiments of the present invention have the following beneficial effects:

According to the data packet extraction method and apparatus provided in the embodiments of the present invention, a session may be established between a first network device and a second network device, so that multiple data packets are transmitted between the first network device and the second network device. Quintuple information of multiple data packets of a same session has the following characteristics: Source IP addresses in the multiple data packets of the same session are an IP address of the first network device or an IP address of the second network device, destination IP addresses in the multiple data packets of the same session are the IP address of the first network device or the IP address of the second network device, source port numbers in the multiple data packets of the same session are a port number of the first network device or a port number of the second network device, destination port numbers in the multiple data packets of the same session are the port number of the first network device or the port number of the second network device, and transport layer protocol numbers used for the multiple data packets of the same session are the same.

Therefore, two hash values calculated based on quintuple information of different data packets of a same session are the same, that is, two calculated remainders are also the same at a same sampling ratio. When one remainder of the two calculated remainders is a preset sampling remainder, all the data packets in a network that belong to the session are extracted, so as to implement data packet extraction based on a session.

The first mapping table stores quintuple information of all to-be-sampled sessions that are recognized before the data packet is received or a Bloom Filter mapping element that uses, as an input, quintuple information of all to-be-sampled sessions that are recognized before the data packet is received. Therefore, when the quintuple information of the different data packets of the same session matches the first mapping table, either all the data packets of the same session can match the first mapping table, or none of the data packets of the same session can match the first mapping table, so as to implement data packet extraction based on a session.

**BRIEF DESCRIPTION OF DRAWINGS**

FIG. 1 is a flowchart of a data packet extraction method according to an embodiment of the present invention;
FIG. 2 is a schematic diagram of a preset feature field according to an embodiment of the present invention;

FIG. 3 is a flowchart of a data packet extraction method according to an embodiment of the present invention;

FIG. 4(a) is a initial schematic diagram of a Bloom Filter table according to an embodiment of the present invention;

FIG. 4(b) is a schematic diagram of a Bloom Filter table after an element is mapped to the Bloom Filter table according to an embodiment of the present invention;

FIG. 5 is a schematic diagram of a mapping table storage manner according to an embodiment of the present invention;

FIG. 6 is a data packet extraction apparatus according to an embodiment of the present invention;

FIG. 7 is a data packet extraction apparatus according to an embodiment of the present invention;

FIG. 8 is a schematic structural diagram of hardware of a data packet extraction apparatus according to an embodiment of the present invention; and

FIG. 9 is a schematic structural diagram of hardware of a data packet extraction apparatus according to an embodiment of the present invention.

## DESCRIPTION OF EMBODIMENTS

Embodiments of the present invention provide a data packet extraction method and apparatus. To make the purpose, technical solutions, and advantages of the embodiments of the present invention clearer, the following clearly describes the technical solutions of the embodiments of the present invention with reference to the accompanying drawings in the embodiments of the present invention.

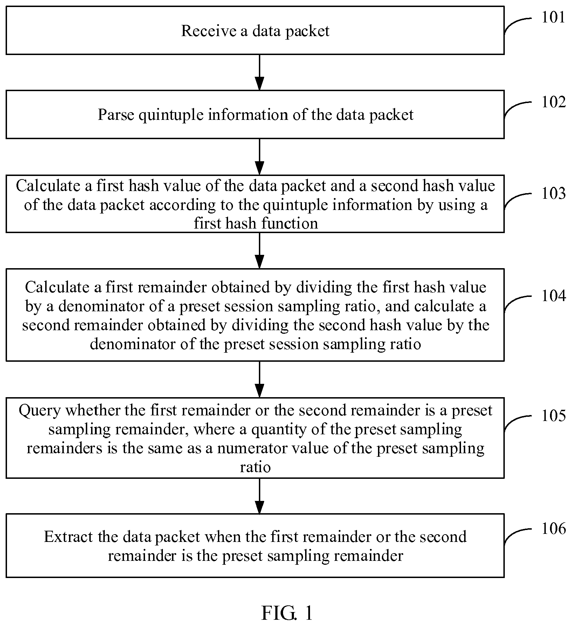

FIG. 1 is a flowchart of a data packet extraction method according to an embodiment of the present invention. The method includes the following steps.

Data information is transmitted in a network in basic units of data packets. A network device that sends a data packet is a source device, and a device that receives the data packet is a destination device. A packet header of each data packet carries quintuple information. The quintuple information includes a source IP address and a source port number of a source device, a destination IP address and a destination port number of a destination device, and a transport layer protocol number used for transmitting the data packet between the source device and the destination device.

A session refers to communication interaction between two network devices within a particular continuous operation time. During a session, all data packets that are mutually transmitted between two network devices belong to the session. In quintuple information carried in a data packet sent by a first network device to a second network device, a source IP address is an IP address of the first network device, a source port number is a port number of the first network device, a destination address is a destination address of the second network device, and a destination port number is a port number of the second network device. In quintuple information carried in a data packet sent by the second network device to the first network device, a source IP address is an IP address of the second network device, a source port number is the port number of the second network device, a destination address is a destination address of the first network device, and a destination port number is the port number of the first network device. Transport layer protocol numbers used for mutually sending the data packets between the two network devices are the same.

Quintuple information of multiple data packets of a same session has the following characteristics: Source IP addresses in the multiple data packets of the same session are the IP address of the first network device or the IP address of the second network device, destination IP addresses in the multiple data packets of the same session are the IP address of the first network device or the IP address of the second network device, source port numbers in the multiple data packets of the same session are the port number of the first network device or the port number of the second network device, destination port numbers in the multiple data packets of the same session are the port number of the first network device or the port number of the second network device, and transport layer protocol numbers used for the multiple data packets of the same session are the same.

That is, the quintuple information of the data packet sent from the first network device to the second network device is (the IP address of the first network device, the port number of the first network device, the IP address of the second network device, the port number of the second network device, and the transport layer protocol number), that is, the source IP address in the data packet sent from the first network device to the second network device is the IP address of the first network device, the source port number in the data packet sent from the first network device to the second network device is the port number of the first network device, the destination IP address in the data packet sent from the first network device to the second network device is the IP address of the second network device, the destination port number in the data packet sent from the first network device to the second network device is the port number of the second network device, and the transport layer protocol number in the data packet sent from the first network device to the second network device is a number of the transport layer protocol used for transmitting these data packets between the first network device and the second network device. The quintuple information of the data packet sent from the second network device to the first network device is (the IP address of the second network device, the port number of the second network device, the IP address of the first network device, the port number of the first network device, and the transport layer protocol number), that is, the source IP address in the data packet sent from the second network device to the first network device is the IP address of the second network device, the source port number in the data packet sent from the second network device to the first network device is the port number of the second network device, the destination IP address in the data packet sent from the second network device to the first network device is the IP address of the first network device, the destination port number in the data packet sent from the second network device to the first network device is the port number of the first network device, and the transport layer protocol number in the data packet sent from the second network device to the first network device is a number of the transport layer protocol used for transmitting these data packets between the first network device and the second network device. The transport layer protocol number carried in the data packet sent from the first network device to the second network device is the same as that carried in the data packet sent from the second network device to the first network device.

Step 101: Receive a data packet.
Step 102: Parse quintuple information of the data packet.
Step 103: Calculate a first hash value of the data packet and a second hash value of the data packet according to the quintuple information by using a first hash function, where the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged.

A network processor (Network Processor, NP) in a network system successively receives a large quantity of data packets transmitted in a network. Each time the network processor receives a data packet, the NP duplicates the data packet, parses quintuple information of the duplicated data packet, and forwards the original data packet according to a transmission path. Persons skilled in the art may understand that, according to the data packet extraction method provided in the present invention, the duplicated data packet rather than the original data packet transmitted in the network is extracted. If the original data packet transmitted in the network is extracted, a destination device cannot receive the extracted data packet, which causes a service error or a service interruption.

A hash function is a function for compressing, by using a hash algorithm, an arbitrary-length input into a fixed-length hash value for output. The hash function is compression mapping, that is, space of a hash value is generally much less than space of an input. In specific implementation, the first hash function in this embodiment of the present invention may use a redundancy check 16 (Cyclic Redundancy Check 16, CRC 16) hash function. Certainly, the first hash function may use a hash function of another type, which is specifically set according to an actual requirement and is not limited herein.

After the quintuple information of the data packet is parsed, the first hash value and the second hash value of the data packet are calculated by using the first hash function. The first hash value is the hash value that is calculated by using the first hash function and by using the quintuple information arranged in the preset order as the input. The second hash value is the hash value that is calculated by using the first hash function and by using, as the input, the quintuple information obtained after in the quintuple information arranged in the preset order, the source IP address and the destination IP address are interchanged and the source port number and the destination port number are interchanged.

For example, a hash value that is calculated by using the first hash function and by using, as an input of the first hash function, a character string obtained after the quintuple information of the data packet is arranged in an order listed in Table 1 is used as the first hash value. Then a hash value that is calculated by using the first hash value and by using a character string arranged in an order listed in Table 2 as another input of the first hash function is used as the second hash value, where the character string arranged in the order listed in Table 2 is obtained after in the character string arranged in the order listed in Table 1, a source IP address and a destination IP address are interchanged and a source port number and a destination port number are interchanged.

**Table 1 Arrangement order of the quintuple information for calculating the first hash value**

| Source IP address | Destination IP address | Source port number | Destination port number | Transport layer protocol number |
|---|---|---|---|---|

**Table 2 Arrangement order of the quintuple information for calculating the second hash value**

| Destination IP address | Source IP address | Destination port number | Source port number | Transport layer protocol number |
|---|---|---|---|---|

It should be noted that when the first hash value and the second hash value are calculated, and when the quintuple information of the data packet is arranged in the preset order and then used as an input, the arrangement order is not limited to the arrangement orders listed in Table 1 and Table 2, provided that it is ensured that a new character string is used as an input for calculating the second hash value, where the new character string is obtained after in a character string that is input for calculating the first hash value, a position of the source IP address and a position of the destination IP address are interchanged, a position of the source port number and a position of the destination port number are interchanged.

For different regions, distribution of the quintuple information of the data packet is quite uneven. To further optimize evenness of extracted data packets, several-bit data may be separately selected from the quintuple information of the data packet, and the several-bit data is arranged in a preset order and then used as an input of the hash function. For example, for different regions, low 8-bit data in the source IP address is evenly distributed, and low 14-bit data in the source port number is evenly distributed. Low 8 bits of the source IP address and those of the destination IP address, low 14 bits of the source port number and those of the destination port, and all of the transport layer protocol number may be selected and arranged in a preset order, to obtain a character string as an input of the first hash function. Certainly, a position and a bit quantity of a character string selected for each of the source IP address, the destination IP address, the source port number, the destination port number, and the transport layer protocol number may be separately set according to an actual requirement. However, it is required to ensure that a bit quantity and a position selected for the source IP address are the same as those selected for the destination IP address, and a bit quantity and a position selected for the source port number are the same as those selected for the destination port number.

> Step 104: Calculate a first remainder obtained by dividing the first hash value by a denominator of a preset session sampling ratio, and calculate a second remainder obtained by dividing the second hash value by the denominator of the preset session sampling ratio.
> Step 105: Query whether the first remainder or the second remainder is a preset sampling remainder, where a quantity of the preset sampling remainders is the same as a numerator value of the preset sampling ratio.
> Step 106: Extract the data packet when the first remainder or the second remainder is the preset sampling remainder.

In this embodiment of the present invention, the data packet is extracted in basic units of sessions. The preset session sampling ratio refers to a proportion of extracted data packets of sessions to data packets that are of a large quantity of sessions and that are transmitted in a network. The first remainder is obtained by means of calculation by dividing the first hash value by the denominator of the preset session sampling ratio, and the second remainder is obtained by means of calculation by dividing the second hash value by the denominator of the preset session sampling ratio. The first remainder and the second remainder are integers that are greater than or equal to 0 and less than or equal to an integer obtained by subtracting 1 from the denominator of the preset session sampling ratio.

For example, it is assumed that the preset session sampling ratio is M/N. When data packets transmitted in the network are data packets of tN sessions, all data packets that are of tM sessions and that are transmitted in the network are extracted, where t is an integer greater than 0. A value of the first remainder and the second remainder ranges from an integer greater than or equal to 0 to an integer less than or equal to N-1. M integers are selected as preset sampling remainders from integers greater than or equal to 0 and less than or equal to N-1.

Whether the first remainder or the second remainder belongs to the preset sampling remainders is queried. The data packet is extracted when the first remainder or the second remainder belongs to the preset sampling remainders. The data packet is not extracted when neither the first remainder nor the second remainder belongs to the preset sampling remainders. Step 101 is returned to receive a next data packet, and step 102 to step 105 are repeatedly performed.

Each data packet transmitted in the network is received, the foregoing operations are performed on each data packet, and the data packet is extracted, in basic units of sessions, from a large quantity of data packets transmitted in the network, so as to implement data packet sampling based on a session.

It may be understood that when the first sampling function is selected, and the preset session sampling ratio is determined, each integer in the preset sampling remainders represents quintuple information of all data packets in a type of to-be-sampled session. It is assumed that any integer in the preset sampling remainders is X. A first hash value and a second hash value are calculated by using the first hash function and based on quintuple information of any data packet in a type of to-be-sampled session represented by X, a remainder obtained by dividing the first hash value by the denominator of the preset session sampling ratio is used as a first remainder, and a remainder obtained by dividing the second hash value by the denominator of the preset session sampling ratio is used as a second remainder. One of the first remainder and the second remainder is X.

Multiple data packets sent from a first network device to a second network device and multiple data packets sent from the second network device to the first network device are put into one group. Multiple data packets in each group belong to a same session. Each session refers to communication between the two network devices. Therefore, for different data packets in a same session, two hash values calculated based on quintuple information by using the first hash function are the same, and two remainders obtained by dividing the two hash values by the denominator of the preset session sampling ratio are also the same. If a data packet that belongs to a session is extracted, it indicates that at least one remainder of two remainders that are calculated based on the data packet belongs to the preset sampling remainders. Two remainders that are calculated based on quintuple information of another data packet in the session are the same as the two remainders that are calculated based on quintuple information of the extracted data packet, that is, at least one remainder of the two remainders that are calculated based on the quintuple information of the another data packet in the session also belongs to the preset sampling remainders. In this case, it is ensured that the another data packet in the received session is also extracted, so as to implement data packet extraction in basic units of sessions.

For example, if a session C between a network device A and a network device B is established, in a data packet that is in the session C and sent from the network device A to the network device B, a source IP address is an IP address of the network device A, a destination IP address is an IP address of the network device B, a source port number is a port number of the network device A, and a destination port number is a port number of the network device B. In a data packet that is in the session C and sent from the network device B to the network device A, a source IP address is the IP address of the network device B, a destination IP address is the IP address of the network device A, a source port number is the port number of the network device B, and a destination port number is the port number of the network device A.

As listed in Table 3, quintuple information of the data packet that is in the session C and that is sent from the network device A to the network device B is arranged in a preset order, and a first hash value that is calculated by using the first hash function and by using, as an input, a character string constituted in Table 3 is D. As listed in Table 4, in the quintuple information arranged in the preset order, the source IP address and the destination IP address are interchanged and the source port number and the destination port number are interchanged, and a second hash value that is calculated by using the first hash function and by using a character string constituted in Table 4 as an input is E.

**Table 3 Arrangement order of the quintuple information for calculating the first hash value**

| IP address of the network device A | IP address of the network device B | Port number of the network device A | Port number of the network device B | Transport layer protocol number |
|---|---|---|---|---|

**Table 4 Arrangement order of the quintuple information for calculating the second hash value**

| IP address of the network device B | IP address of the network device A | Port number of the network device B | Port number of the network device A | Transport layer protocol number |
|---|---|---|---|---|

As listed in Table 5, quintuple information of the data packet that is in the session C and that is sent from the network device B to the network device A is arranged in a preset order. A character string constituted in Table 5 is used as an input, and the character string listed in Table 5 is the same as the character string listed in Table 4; therefore, a first hash value calculated by using the first hash function is E. As listed in Table 6, in the quintuple information arranged in the preset order, the source IP address and the destination IP address are interchanged and the source port number and the destination port number are interchanged. A character string constituted in Table 6 is used as an input, and the character string listed in Table 6 is the same as the character string listed in Table 3; therefore, a second hash value calculated by using the first hash function is D.

**Table 5 Arrangement order of the quintuple information for calculating the first hash value**

| IP address of the network device B | IP address of the network device A | Port number of the network device B | Port number of the network device A | Transport layer protocol number |
|---|---|---|---|---|

**Table 6 Arrangement order of the quintuple information for calculating the first hash value**

| IP address of the network device A | IP address of the network device B | Port number of the network device A | Port number of the network device B | Transport layer protocol number |
|---|---|---|---|---|

In this case, the hash values that are calculated based on the quintuple information of all the data packets in the session C are D and E. Two remainders that are respectively calculated by dividing the two hash values D and E by the denominator of the preset session sampling ratio are F and G. When either of F and G belongs to the preset sampling remainders, all the data packets that belong to the session C are extracted.

In another embodiment, before the extracting the data packet, the data packet extraction method described in this embodiment of the present invention further includes:

extracting at least one preset feature field from the data packet, where the preset feature field is a character string of a preset offset length at a preset position in the data packet;

calculating a feature hash value of each preset feature field by using the second hash function and by using the preset feature field as an input;

querying whether the feature hash value of each preset feature field is the same as a preset hash value of the preset feature field; and

extracting the data packet when the feature hash value of each preset feature field is the same as the preset hash value of the preset feature field.

The preset feature field is a character string that is of the preset offset length and that is extracted at the preset position in the data packet. The used second hash function is set, and the preset hash value that is of each preset feature field and calculated by using the second hash function is set. A position and an offset length of each preset feature field may be specifically set according to an actual requirement. After the data packet is received, a preset feature field is extracted. A hash value of each extracted preset feature field is calculated by using the second hash function and by using the preset feature field as an input. The data packet is extracted when the hash value of each preset feature field is equal to the preset hash value of the preset feature field.

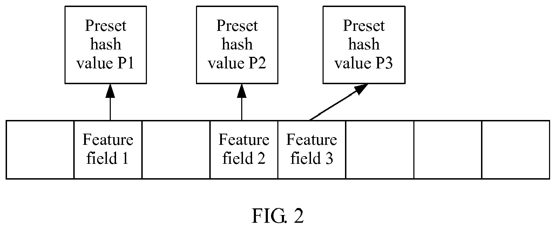

For example, as shown in FIG. 2, i preset feature fields are set, positions and offset lengths of all the preset feature fields are separately set, and preset hash values that are of all the preset feature fields and calculated by using the second hash function are respectively P1, P2, ..., Pi. After the data packet is received, all the preset feature fields are extracted from the data packet, and hash values Q1, Q2, ..., Qi of all the preset feature fields are calculated by using the second hash value. The data packet is extracted when P1 = Q1, P2 = Q2, ... , Pi = Qi are true.

In actual application, the preset feature field may be specifically set according to an actual case. For example, the preset feature field may be set according to a sample of a data packet received when a session attack occurs, so as to effectively recognize the session attack. Optionally, a source IP address and a destination IP address may be selected as preset feature fields to extract a data packet of a session between two particular network devices.

The data packet extraction method provided in this embodiment of the present invention may further be implemented in another manner: receiving a data packet; parsing quintuple information of the data packet; calculating a fourth hash value of the data packet by using a first hash function and by using, as an input, quintuple information that is of the data packet and arranged in descending order; calculating a third remainder obtained by dividing the fourth hash value of the data packet by a denominator of a preset session sampling ratio; querying whether the third remainder is the preset sampling remainder; and extracting the data packet when the third remainder is the preset sampling remainder.

When the foregoing implementation manner is used, each time a data packet is received, a hash value needs to be calculated only once by using, as an input, quintuple information that is of the data packet and arranged in descending order. Input character strings that are obtained by arranging quintuple information of different data packets in a same session in descending order are the same, fourth hash values calculated by using the first hash function are the same, and third remainders obtained by dividing the fourth hash values by the denominator of the preset session sampling ratio also are the same. Therefore, all the data packets in the same session can be extracted. Certainly, in specific implementation, the quintuple information may be arranged in ascending order, and an implementation manner is similar.

It can be learned from the foregoing content that the present invention further has the following beneficial effects:

At least one preset feature field is extracted from the data packet, and a data packet in which a hash value of each preset feature field is the same as a preset hash value of the preset feature field is extracted, so as to intentionally extract a data packet in a session of interest, pertinently recognize a session attack in a network, analyze a particular session in a network, or the like.

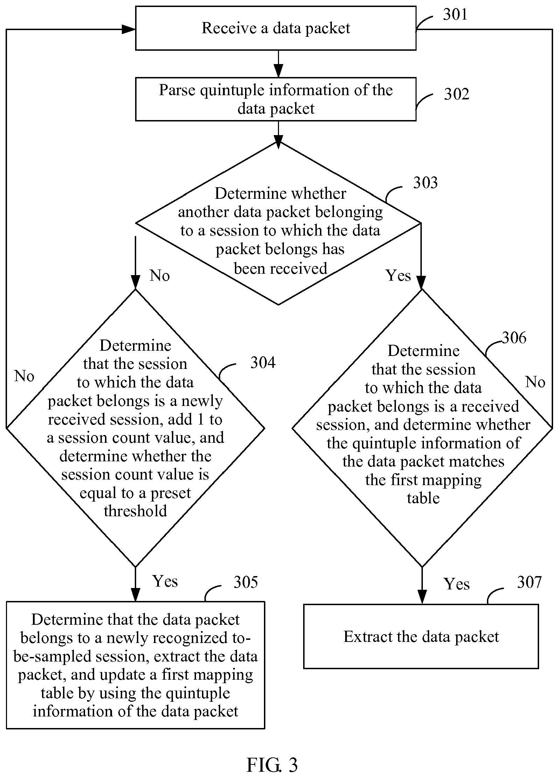

FIG. 3 is a flowchart of a data packet extraction method according to an embodiment of the present invention. The method includes the following steps.

Step 301: Receive a data packet.
Step 302: Parse quintuple information of the data packet.

A network processor (Network Processor, NP) in a network system successively receives a large quantity of data packets transmitted in a network. Each time the network processor receives a data packet, the NP duplicates the data packet, parses quintuple information of the duplicated data packet, and forwards the original data packet according to a transmission path. Persons skilled in the art may understand that, according to the data packet extraction method provided in the present invention, the duplicated data packet rather than the original data packet transmitted in the network is extracted. If the original data packet transmitted in the network is extracted, a destination device cannot receive the extracted data packet, which causes a service error or a service interruption.

Data information is transmitted in a network in basic units of data packets. A network device that sends a data packet is a source device, and a device that receives the data packet is a destination device. A packet header of each data packet carries quintuple information. The quintuple information includes a source IP address and a source port number of a source device, a destination IP address and a destination port number of a destination device, and a transport layer protocol number used for transmitting the data packet between the source device and the destination device.

Step 303: Determine whether another data packet belonging to a session to which the data packet belongs has been received; if another data packet belonging to the session to which the data packet belongs has not been received, perform step 304; or if another data packet belonging to the session to which the data packet belongs has been received, perform step 306.

In this embodiment of the present invention, when another data packet belonging to the session to which the data packet belongs has been received, the session to which the data packet belongs is a received session. When another data packet belonging to the session to which the data packet belongs has not been received, the data packet is the first received session in the session, and the session to which the data packet belongs is a newly received session.

It should be noted herein that a newly received session is a relative concept. For a currently received data packet, when another data packet belonging to a session to which the data packet belongs has not been received, the session to which the data packet belongs is a newly received session. For a next received data packet, because a received data packet exists in the newly received session, the newly received session is a received session relative to the next received data packet.

Step 303 has at least two possible implementation manners:

In a first possible implementation manner, the determining whether another data packet belonging to a session to which the data packet belongs has been received, includes:

parsing a flag field carried in the data packet;

determining whether the flag field is an SYN flag field; and

when the flag field is the SYN flag field, determining that another data packet belonging to the session to which the data packet belongs has not been received; or when the flag field is not the SYN flag field, determining that another data packet belonging to the session to which the data packet belongs has been received.

A data packet carrying an SYN flag field is a handshake data packet sent when two network devices establish a TCP session, that is, the first data packet sent when the TCP session is established. When the data packet carries the SYN flag field, another data packet belonging to the session to which the data packet belongs has not been received, and the session is a newly received session. When a flag field carried in the data packet is not an SYN, at least one data packet belonging to the session to which the data packet belongs has been received and the at least one received data packet carries the SYN flag field, and the session is a received session.

In a second possible implementation manner, the determining whether another data packet belonging to a session to which the data packet belongs has been received, includes:

determining whether the quintuple information of the data packet matches a second mapping table; and

when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

The second mapping table stores quintuple information of all sessions that are received before the data packet is received or a Bloom Filter mapping element that uses, as an input, quintuple information of all sessions that are received before the data packet is received.

It may be understood that the second mapping table is obtained by means of update with continuous receiving of data packets. When the first data packet is received, there is no received session, and no information is stored in the second mapping table. As received data packets increase, that is, received sessions increase, the second mapping table stores increasing pieces of quintuple information of received sessions or Bloom Filter mapping elements.

When the second mapping table stores the quintuple information of all the sessions that are received before the data packet is received, the second mapping table stores quintuple information of the first received data packet of each received session. The second mapping table is traversed to query whether the quintuple information of the data packet is the same as a piece of quintuple information stored in the second mapping table. If the quintuple information of the data packet is the same as a piece of quintuple information stored in the second mapping table, the quintuple information of the data packet matches the second mapping table. If the quintuple information of the data packet is not the same as a piece of quintuple information stored in the second mapping table, in the quintuple information of the data packet, a source IP address and a destination IP address are interchanged and a source port number and a destination port number are interchanged, to obtain quintuple information of a data packet that belongs to the same session as the data packet. Whether the quintuple information of the data packet is the same as a piece of quintuple information stored in the second mapping table is queried. If the quintuple information of the data packet is the same as a piece of quintuple information stored in the second mapping table, the quintuple information of the data packet matches the second mapping table. If the quintuple information of the data packet is not the same as a piece of quintuple information stored in the second mapping table, the quintuple information of the data packet does not match the second mapping table, and the session to which the data packet belongs is a newly received session.

The second mapping table stores only quintuple information of the first received data packets of all the received sessions. When another data packet of the received session is further received, a source IP address in the data packet is the same as a source IP address in the first received data packet of the received session, a destination IP address in the data packet is the same as a destination IP address in the first received data packet of the received session, a source port number in the data packet is the same as a source port number in the first received data packet of the received session, and a destination port number in the data packet is the same as a destination port number in the first received data packet of the received session; or a source IP address in the data packet is the same as a destination IP address in the first received data packet of the received session, a destination IP address in the data packet is the same as a source IP address in the first received data packet of the received session, a source port number in the data packet is the same as a destination port number in the first received data packet of the received session, and a destination port number in the data packet is the same as a source port number in the first received data packet of the received session.

Therefore, when whether the quintuple information of the data packet matches the second mapping table is being determined, if either piece of quintuple information of the quintuple information of the data packet or the quintuple information obtained after in the quintuple information of the data packet, the source IP address and the destination IP address are interchanged and the source port number and the destination port number are interchanged is the same as a piece of quintuple information stored in the second mapping table, the quintuple information of the data packet matches the second mapping table, and the data packet belongs to a received session; if neither of the two pieces of quintuple information is the same as quintuple information stored in the second mapping table, the quintuple information of the data packet does not match the second mapping table, and the data packet belongs to a newly received session.

When the quintuple information of the data packet matches the second mapping table, another data packet belonging to the session to which the data packet belongs has been received, and the data packet belongs to a received session. When the quintuple information of the data packet does not match the second mapping table, another data packet belonging to the session to which the data packet belongs has not been received, the data packet belongs to a newly received session, and the quintuple information of the data packet is stored in the second mapping table to update the second mapping table.

When the second mapping table stores the Bloom Filter mapping element that uses, as an input, the quintuple information of all the sessions that are received before the data packet is received, the second mapping table is a Bloom Filter table. Multiple hash values are calculated by using multiple preset hash functions and by using the quintuple information of the first received data packet of each received session as an input, and values at positions in the Bloom Filter table that are corresponding to all the hash values are set to 1, to obtain the second mapping table.

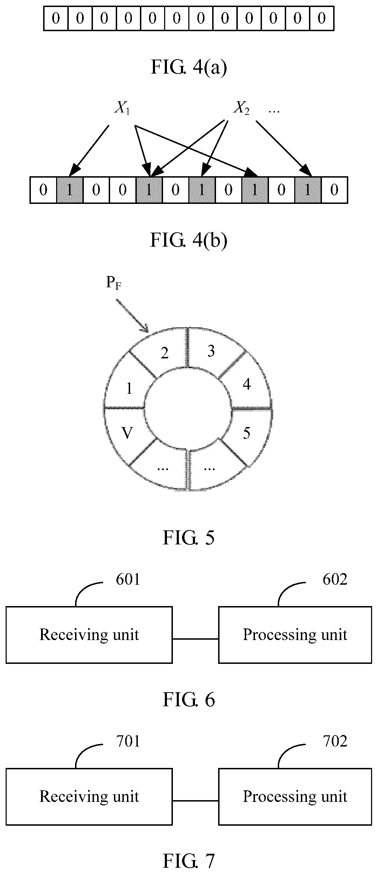

A Bloom Filter table is a space-efficient probabilistic data structure, and concisely indicates a set by using a bit array. In an initial state, a Bloom Filter is a bit array including m bits. As shown in FIG. 4(a), all bits are set to 0.

To express a set of n elements S = {x1, x2, ..., xn}, the Bloom Filter uses k mutually independent hash functions to respectively map each element in the set to the m-bit bit array {1, ..., m} in the Bloom Filter table. For any element x therein, a position at which a hash value $h_j(x)$ that is calculated by using x as an input and by using the $j^{th}$ hash function is mapped to the Bloom Filter table is set to 1 ($1 \le j \le k$). It should be noted herein that if a position in the Bloom Filter table is set to 1 for many times, only the first setting is effective, and subsequent several settings have no effect.

For example, if the Bloom Filter uses three mutually independent hash functions, that is, k = 3, when the elements x1 and x2 in S are mapped to the Bloom Filter table, positions at which h1(x1), h2(x1), and h3(x1) are mapped to the Bloom Filter table are set to 1, and positions at which h1(x2), h2(x2), and h3(x2) are mapped to the Bloom Filter table are set to 1, as shown in FIG. 4(b). On the contrary, when whether any element x in S belongs to a set indicated by the Bloom Filter table is being determined, h1(x), h2(x), and h3(x) are calculated, and whether positions at which h1(x), h2(x), and h3(x) are mapped to the Bloom Filter table are set to 1 is queried. When the positions at which h1(x), h2(x), and h3(x) are mapped to the Bloom Filter table are set to 1, the element x belongs to the set indicated by the Bloom Filter table. When one of the positions at which h1(x), h2(x), and h3(x) are mapped to the Bloom Filter table is 0, the element x does not belong to the set indicated by the Bloom Filter table.

It should be noted herein that a quantity and type of hash functions used by the Bloom Filter may be set according to an actual requirement, which is not specifically limited herein.

When whether the quintuple information of the data packet matches the second mapping table is being determined, k hash values are respectively calculated by using k mutually independent hash functions and by using, as an input, the quintuple information that is of the data packet and arranged in a preset order, and whether positions in the second mapping table that are corresponding to the k hash values are set to 1 is queried. If the positions in the second mapping table that are corresponding to the k hash values are set to 1, the quintuple information of the data packet matches the second mapping table. If not all the positions in the second mapping table that are corresponding to the k hash values are set to 1, k hash values are respectively calculated by using the k mutually independent hash functions and by using, as an input, quintuple information obtained after in the quintuple information that is of the data packet and arranged in the preset order, a source IP address and a destination IP address are interchanged and a source port number and a destination port number are interchanged, and whether positions in the second mapping table that are corresponding to the k hash values are set to 1 is queried. If the positions in the second mapping table that are corresponding to the k hash values are set to 1, the quintuple information of the data packet matches the second mapping table. If not all the positions in the second mapping table that are corresponding to the k hash values are set to 1, the quintuple information of the data packet does not match the second mapping table.

The second mapping table stores only a Bloom Filter element that uses quintuple information of the first received data packets of all the received sessions as an input. When another data packet of the received session is further received, a source IP address in the data packet is the same as a source IP address in the first received data packet of the received session, a destination IP address in the data packet is the same as a destination IP address in the first received data packet of the received session, a source port number in the data packet is the same as a source port number in the first received data packet of the received session, and a destination port number in the data packet is the same as a destination port number in the first received data packet of the received session; or a source IP address in the data packet is the same as a destination IP address in the first received data packet of the received session, a destination IP address in the data packet is the same as a source IP address in the first received data packet of the received session, a source port number in the data packet is the same as a destination port number in the first received data packet of the received session, and a destination port number in the data packet is the same as a source port number in the first received data packet of the received session.

When at least one bit at the positions at which the k hash values are mapped to the second mapping table is 0, and at least one bit at the positions at which other k hash values are mapped to the second mapping table is 0, the quintuple information of the data packet does not match the second mapping table, and the data packet belongs to a newly received session, where the k hash values are calculated by using, as the input, the quintuple information that is of the data packet and arranged in the preset order, and the other k hash values are calculated by using, as the input, the quintuple information obtained after in the quintuple information that is of the data packet and arranged in the preset order, the source IP address and the destination IP address are interchanged and the source port number and the destination port number are interchanged. The k hash values that are calculated by using, as the input, the quintuple information that is of the data packet and arranged in the preset order are mapped to the second mapping table, that is, the positions in the second mapping table that are corresponding to the k hash values are set to 1, to update the second mapping table.

In another embodiment, the second mapping table stores the Bloom Filter mapping element that uses, as an input, the quintuple information of each session that is received before the data packet is received, multiple hash values are calculated by using multiple preset hash functions and by using, as an input, quintuple information that is of each received session and arranged in descending order, and values at positions in the Bloom Filter table that are corresponding to all the hash values are set to 1, to obtain the second mapping table.

When whether the quintuple information of the data packet matches the second mapping table is being determined, k hash values are respectively calculated by using k mutually independent hash functions and by using, as an input, quintuple information that is of the data packet and arranged in descending order, and whether positions in the second mapping table that are corresponding to the k hash values are set to 1 is queried. If the positions in the second mapping table that are corresponding to the k hash values are set to 1, the quintuple information of the data packet matches the second mapping table. If not all the positions in the second mapping table that are corresponding to the k hash values are set to 1, the quintuple information of the data packet does not match the second mapping table. In this embodiment, k hash values are calculated by using, as an input, the quintuple information that is of the received session and arranged in descending order and are mapped to the Bloom Filter table, to generate the second mapping table. Because character strings that are obtained by arranging quintuple information of different data packets in a same session in descending order are the same, when whether the data packet matches the second mapping table is being determined, k hash values need to be calculated only once by using k hash functions and by using, as an input, the quintuple information that is of the data packet and arranged in descending order.

When the data packet does not match the second mapping table, another data packet belonging to the session to which the data packet belongs has not been received, the session is a newly received session, k hash values are calculated by using the k hash functions and by using, as an input, the quintuple information that is of the data packet and arranged in descending order, and positions in the second mapping table that are corresponding to the k hash values are set to 1, to update the second mapping table.

It should be noted herein that when the quintuple information of the data packet is being sorted, the quintuple information may alternatively be arranged in ascending order.

Step 304: Determine that the session to which the data packet belongs is a newly received session, add 1 to a session count value, and determine whether the session count value is equal to a preset threshold. If the session count value is equal to the preset threshold, perform step 305; or if the session count value is not equal to the preset threshold, return to step 301.

Whether another data packet belonging to a session to which the data packet belongs has been received is determined according to step 303. When another data packet belonging to the session to which the data packet belongs has not been received, the session to which the data packet belongs is a newly received session. In this case, 1 is added to the session count value, which indicates that the received session is increased by 1.

The preset threshold is to control a proportion of extracted sessions, and may be set according to an actual case. When the session count is equal to the preset threshold, the session to which the data packet belongs is a to-be-sampled session. For example, when the preset threshold is set to 100, one session is extracted from each of 100 sessions. Each time the session count value is equal to the preset threshold, the session count value is reset to 0 and recounted. When the session count is not equal to the preset threshold, the session to which the data packet belongs is not a to-be-sampled session, and step 101 is returned to extract a next data packet.

Step 305: Determine that the data packet belongs to a newly recognized to-be-sampled session, extract the data packet, and update a first mapping table by using the quintuple information of the data packet, where the first mapping table stores quintuple information of all to-be-sampled sessions that are recognized before the data packet is received or a Bloom Filter mapping element that uses, as an input, quintuple information of all to-be-sampled sessions that are recognized before the data packet is received.

When another data packet belonging to the session to which the data packet belongs has not been received, and the session count is equal to the preset threshold, the data packet belongs to a newly recognized to-be-sampled session. The data packet is extracted, and the first mapping table is updated by using the quintuple information of the data packet.

When the first mapping table stores quintuple information of a recognized to-be-sampled session, the quintuple information of the data packet is stored in the first mapping table to update the first mapping table.

When the first mapping table stores the Bloom Filter mapping element that uses the quintuple information of all the recognized to-be-sampled sessions as an input, the updating a first mapping table by using the quintuple information of the data packet includes:

using, as a third hash value group, multiple hash values that are calculated by using the preset hash function group and by using, as an input, the quintuple information that is of the data packet and arranged in the preset order; and setting values at positions in the first mapping table that are corresponding to all hash values in the third hash value group to 1.

It should be noted herein that the updating a first mapping table by using the quintuple information of the data packet is similar to the updating the second mapping table by using the quintuple information of the data packet described in step 303. The hash function group includes k hash functions, the quintuple information of the data packet is arranged in a preset order, k hash values are calculated by using the k hash functions, and values at positions in the first mapping table that are corresponding to the k hash values are set to 1. For details, refer to step 303, which are not described herein again.

In another embodiment, the first mapping table stores a Bloom Filter mapping element that uses, as an input, quintuple information of each to-be-sampled session that is recognized before the data packet is received, multiple hash values are calculated by using multiple preset hash functions and by using, as an input, quintuple information that is of each recognized to-be-sampled session and arranged in descending order, and values at positions in the Bloom Filter table that are corresponding to all the hash values are set to 1, to obtain the first mapping table.

When whether the quintuple information of the data packet matches the first mapping table is being determined, k hash values are respectively calculated by using k mutually independent hash functions and by using, as an input, the quintuple information that is of the data packet and arranged in descending order, and whether positions in the first mapping table that are corresponding to the k hash values are set to 1 is queried. If the positions in the first mapping table that are corresponding to the k hash values are set to 1, the quintuple information of the data packet matches the first mapping table. If not all the positions in the first mapping table that are corresponding to the k hash values are set to 1, the quintuple information of the data packet does not match the first mapping table.

In this embodiment, k hash values are calculated by using, as an input, the quintuple information that is of the received session and arranged in descending order and are mapped to the Bloom Filter table, to generate the first mapping table. Because character strings that are obtained by arranging quintuple information of different data packets in a same session in descending order are the same, when whether the data packet matches the first mapping table is being determined, k hash values need to be calculated only once by using k hash functions and by using, as an input, the quintuple information that is of the data packet and arranged in descending order.

It should be noted herein that when the quintuple information of the data packet is being sorted, the quintuple information may alternatively be arranged in ascending order.

Step 306: Determine that the session to which the data packet belongs is a received session, and determine whether the quintuple information of the data packet matches the first mapping table. If the quintuple information of the data packet matches the first mapping table, perform step 307; or if the quintuple information of the data packet does not match the first mapping table, return to step 301.

The determining whether the quintuple information of the data packet matches the first mapping table is similar to the determining whether the quintuple information of the data packet matches the second mapping table in step 303.

When the first mapping table stores quintuple information of a recognized to-be-sampled session, whether the quintuple information of the data packet matches the first mapping table is determined, and whether the quintuple information of the data packet is the same as a piece of quintuple information stored in the first mapping table is queried. If the quintuple information of the data packet is the same as a piece of quintuple information stored in the first mapping table, the quintuple information of the data packet matches the first mapping table. If the quintuple information of the data packet is not the same as a piece of quintuple information stored in the first mapping table, in the quintuple information of the data packet, the source IP address and the destination IP address are interchanged and the source port number and the destination port number in the data packet are interchanged, to obtain another piece of quintuple information, and whether the another piece of quintuple information is the same as a piece of quintuple information stored in the first mapping table is queried. If the another piece of quintuple information is the same as a piece of quintuple information stored in the first mapping table, the quintuple information of the data packet matches the first mapping table. If the another piece of quintuple information is not the same as a piece of quintuple information stored in the first mapping table, the data packet does not match the first mapping table.

When the first mapping table stores the Bloom Filter mapping element that uses the quintuple information of all the recognized to-be-sampled sessions as an input, the determining whether the quintuple information of the data packet matches the first mapping table includes:

using, as a first hash value group, multiple hash values that are calculated by using a preset hash function group and by using, as an input, the quintuple information that is of the data packet and arranged in a preset order, where the preset hash function group is a hash function group used when the first mapping table is generated, and includes multiple preset hash functions;
querying whether values at positions in the first mapping table that are corresponding to all hash values in the first hash value group are 1; and
when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;
querying, from the first mapping table, whether values at positions corresponding to all hash values in the second hash value group are 1; and
when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

K hash functions included in the hash function group used in step 306 are the same as the k hash functions used in step 303. In addition, the determining whether the quintuple information of the data packet matches the first mapping table is similar to step 303. For details, refer to the description in step 303, which are not described herein again.

When the session to which the data packet belongs has a received data packet, and the quintuple information of the data packet matches the first mapping table, the data packet belongs to a recognized to-be-sampled session, and the data packet is extracted. When the data packet does not match the first mapping table, the data packet does not belong to a recognized to-be-sampled session, and step 101 is returned to receive a next data packet.

Step 307: Extract the data packet.

In the data packet extraction method provided in this embodiment of the present invention, when the first mapping table and the second mapping table are Bloom Filter tables, a large amount of storage space may be saved compared with a case in which the first mapping table and the second mapping table store quintuple information. The following describes several points about technical implementation when the first mapping table and the second mapping table are Bloom Filter tables.

First, when the first mapping table and the second mapping table are the Bloom Filter tables, selection of k hash functions in a used hash function group is as follows:

It is relatively complex to select k different hash functions. A simple method is selecting one hash function and then setting k different inputs. For example, a manner such as setting k different arrangement orders for quintuple information arranged in a preset order or adding several bits at k different positions is used.

Second, selection of values of m, n, and k is as follows.

Because a Bloom Filter algorithm is used to compress a width of a flow table, some errors caused by hash calculation conflicts are eliminated to reduce consumption of NP resources. A Bloom Filter is a space-efficient probabilistic data structure, concisely indicates a set by using a bit array, and can determine whether an element belongs to the set. However, when whether an element belongs to a set is being determined, an element that does not belong to the set may be mistaken for belonging to the set (false positive). Therefore, the Bloom Filter is inapplicable to those "error-free" application scenarios. However, in an application scenario in which a low error rate can be tolerated, the Bloom Filter makes great savings in storage space with extremely few errors.

It is assumed that $kn < m$ and all hash functions are completely random. When all elements in a set $S = \{x1, x2, ..., xn\}$ are mapped to a bit array of m bits by using the k hash functions, a probability that a bit in the bit array is still 0 is:

$$p' = \left(1 - \frac{1}{m}\right)^{kn} \approx e^{-kn/m}.$$

A false positive probability is:

$$\left(1 - \left(1 - \frac{1}{m}\right)^{kn}\right)^{k} \approx \left(1 - e^{kn/m}\right)^{k}.$$

When $k = \ln 2 \times m/n$, a minimum false positive probability is $P = (1/2) k$.

It is assumed that when network bandwidth is 400 G, concurrent traffic is $n = 10$ M (which may reach to 50 M in an extreme case) in a normal case. To meet a condition that a statistical deviation is lower than 1%, a quantity k of hash functions is set to 7. Calculation of a value of m is $m = K \times n/(\ln2) \approx 110$ Mbit = 13.75 MB, that is, the first mapping table needs to occupy a memory of 68.75 MB, which reduces storage space by 10 times compared with directly storing quintuple information of a data packet.

When a preset threshold is 1000, a session sampling ratio is 1:1000, a concurrent session that needs to be sampled is 50K, $n = 50$K in the Bloom Filter, and according to previous speculation, required m bits are: $m = K \times n/(\ln2) = 7 \times 50$K/ln2 $\approx 550$ Kbit = 70 KB.

To delay time at which the Bloom Filter table overflows, a scale of the Bloom Filter table needs to be multiplied. Herein because the scale does not need to be quite precise, the scale may be calculated according to 10 times, and an NP memory of 700 KB is needed. Therefore, a memory required by the second mapping table is 1.4 MByte, which reduces storage space by 500 times compared with directly storing the quintuple information of the data packet.

Third, a storage manner of the first mapping table and the second mapping table is as follows.

The first mapping table or the second mapping table consists of V subtables, and a size of each subtable is Wbit. When a load capacity of each subtable (where the load capacity is defined as a quantity of bits in the table that are 1) is $\alpha$, a quantity of sessions that can be represented by each subtable is: $-W\dfrac{\ln\alpha}{k}$, where k is a quantity of hash functions. By using a head pointer, the V subtables form a ring for cycle use, as shown in FIG. 5. When a load capacity of a subtable is greater than $\alpha$ (or a counter is greater than a threshold), a pointer $P_F$ moves to a next subtable, and a new subtable to which the pointer points is cleared to store a new numeric value.

FIG. 6 is a data packet extraction apparatus according to an embodiment of the present invention. The apparatus includes:

a receiving unit 601 and a processing unit 602 connected to the receiving unit.

The receiving unit 601 is configured to receive a data packet and send the data packet to the processing unit.
The processing unit 602 is configured to: parse quintuple information of the data packet; calculate a first hash value and a second hash value of the data packet according to the quintuple information by using a first hash function, where the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged; calculate a first remainder obtained by dividing the first hash value by a denominator of a preset session sampling ratio, and calculate a second remainder obtained by dividing the second hash value by the denominator of the preset session sampling ratio; query whether the first remainder or the second remainder is a preset sampling remainder, where a quantity of the preset sampling remainders is the same as a numerator value of the preset sampling ratio; and extract the data packet when the first remainder or the second remainder is the preset sampling remainder.
In an embodiment provided in this embodiment of the present invention, before extracting the data packet, the processing unit 602 is further configured to:

extract at least one preset feature field from the data packet, where the preset feature field is a character string of a preset offset length at a preset position in the data packet; calculate a feature hash value of each preset feature field by using the second hash function and by using the preset feature field as an input; query whether the feature hash value of each preset feature field is the same as a preset hash value of the preset feature field; and extract the data packet when the feature hash value of each preset feature field is the same as the preset hash value of the preset feature field.

The data packet extraction apparatus shown in FIG. 6 is an apparatus corresponding to the data packet extraction method shown in FIG. 1. For a specific implementation manner, refer to the description in the data packet extraction method shown in FIG. 1. Details are not described herein again.
FIG. 7 is a data packet extraction apparatus according to an embodiment of the present invention. The apparatus includes:

a receiving unit 701 and a processing unit 702 connected to the receiving unit.

The receiving unit 701 is configured to receive a data packet and send the data packet to the processing unit 702.
The processing unit 702 is configured to: parse quintuple information of the data packet; determine whether another data packet belonging to a session to which the data packet belongs has been received; and;
when another data packet belonging to the session to which the data packet belongs has not been received, determine that the session to which the data packet belongs is a newly received session, add 1 to a session count value, and determine whether the session count value is equal to a preset threshold; and when the session count value is equal to the preset threshold, determine that the data packet belongs to a newly recognized to-be-sampled session, extract the data packet, and update a first mapping table by using the quintuple information of the data packet; or when another data packet belonging to the session to which the data packet belongs has been received, determine that the session to which the data packet belongs is a received session, and determine whether the quintuple information of the data packet matches the first mapping table; and extract the data packet when the quintuple information of the data packet matches the first mapping table, where the first mapping table stores quintuple information of all to-be-sampled sessions that are recognized before the data packet is received or a Bloom Filter mapping element that uses, as an input, quintuple information of all to-be-sampled sessions that are recognized before the data packet is received.
In an embodiment provided in this embodiment of the present invention, that the processing unit 702 is configured to determine whether another data packet belonging to a session to which the data packet belongs has been received, includes:

parsing a flag field carried in the data packet; determining whether the flag field is an SYN flag field; and when the flag field is the SYN flag field, determining that another data packet belonging to the session to which the data packet belongs has not been received; or when the flag field is not the SYN flag field, determining that another data packet belonging to the session to which the data packet belongs has been received.

In another embodiment provided in this embodiment of the present invention, that the processing unit 702 is configured to determine whether another data packet belonging to a session to which the data packet belongs has been received, includes:

determining whether the quintuple information of the data packet matches a second mapping table, where the second mapping table stores quintuple information of all sessions that are received before the data packet is received or a Bloom Filter mapping element that uses, as an input, quintuple information of all sessions that are received before the data packet is received; and when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

In another embodiment provided in this embodiment of the present invention, the first mapping table stores the Bloom Filter mapping element that uses, as an input, the quintuple information of all the to-be-sampled sessions that are recognized before the data packet is received.

That the processing unit 702 is configured to determine whether the quintuple information of the data packet matches the first mapping table includes:

using, as a first hash value group, multiple hash values that are calculated by using a preset hash function group and by using, as an input, the quintuple information that is of the data packet and arranged in a preset order, where the preset hash function group is a hash function group used when the first mapping table is generated, and includes multiple preset hash functions;

querying whether values at positions in the first mapping table that are corresponding to all hash values in the first hash value group are 1; and

when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;

querying, from the first mapping table, whether values at positions corresponding to all hash values in the second hash value group are 1; and

when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

In another embodiment provided in this embodiment of the present invention, the first mapping table stores the Bloom Filter mapping element that uses, as an input, the quintuple information of all the to-be-sampled sessions that are recognized before the data packet is received.

That the processing unit 702 is configured to update a first mapping table by using the quintuple information of the data packet includes:

using, as a third hash value group, multiple hash values that are calculated by using the preset hash function group and by using, as an input, the quintuple information that is of the data packet and arranged in the preset order; and

setting values at positions in the first mapping table that are corresponding to all hash values in the third hash value group to 1.

The data packet extraction apparatus shown in FIG. 7 is an apparatus corresponding to the data packet extraction method shown in FIG. 3. For a specific implementation manner, refer to the description in the data packet extraction method shown in FIG. 3. Details are not described herein again.

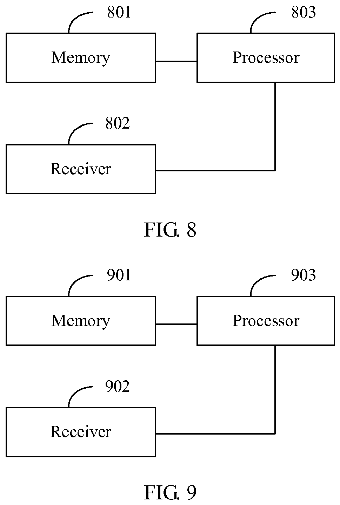

FIG. 8 is a schematic structural diagram of hardware of a data packet extraction apparatus according to an embodiment of the present invention. The data packet extraction apparatus includes a memory 801, a receiver 802, and a processor 803 connected both to the memory 801 and the receiver 802. The memory 801 is configured to store a set of program instructions. The processor 803 is configured to invoke the program instructions stored in the memory 801 to perform the following operations:

triggering the receiver 802 to receive a data packet and send the data packet to the processor 803; and

triggering the processor 803 to: parse quintuple information of the data packet; calculate a first hash value and a second hash value of the data packet according to the quintuple information by using a first hash function, where the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged; calculate a first remainder obtained by dividing the first hash value by a denominator of a preset session sampling ratio, and calculate a second remainder obtained by dividing the second hash value by the denominator of the preset session sampling ratio; query whether the first remainder or the second remainder is a preset sampling remainder, where a quantity of the preset sampling remainders is the same as a numerator value of the preset sampling ratio; and extract the data packet when the first remainder or the second remainder is the preset sampling remainder.

In an embodiment provided in this embodiment of the present invention, before extracting the data packet, the processor 803 is further configured to:

extract at least one preset feature field from the data packet, where the preset feature field is a character string of a preset offset length at a preset position in the data packet; calculate a feature hash value of each preset feature field by using the second hash function and by using the preset feature field as an input; query whether the feature hash value of each preset feature field is the same as a preset hash value of the preset feature field; and extract the data packet when the feature hash value of each preset feature field is the same as the preset hash value of the preset feature field.

The data packet extraction apparatus shown in FIG. 8 is an apparatus corresponding to the data packet extraction method shown in FIG. 1. For a specific implementation manner, refer to the description in the data packet extraction method shown in FIG. 1. Details are not described herein again.

FIG. 9 is a schematic structural diagram of hardware of a data packet extraction apparatus according to an embodiment of the present invention. The data packet extraction apparatus includes a memory 901, a receiver 902, and a processor 903 connected both to the memory 901 and the receiver 902. The memory 901 is configured to store a set of program instructions. The processor 903 is configured to invoke the program instructions stored in the memory 901 to perform the following operations:

The receiver 902 is configured to receive a data packet and send the data packet to the processor 903.

The processor 903 is configured to: parse quintuple information of the data packet; calculate a first hash value and a second hash value of the data packet according to the quintuple information by using a first hash function, where the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged; calculate a first remainder obtained by dividing the first hash value by a denominator of a preset session sampling ratio, and calculate a second remainder obtained by dividing the second hash value by the denominator of the preset session sampling ratio; query whether the first remainder or the second remainder is a preset sampling remainder, where a quantity of the preset sampling remainders is the same as a numerator value of the preset sampling ratio; and extract the data packet when the first remainder or the second remainder is the preset sampling remainder.

In an embodiment provided in this embodiment of the present invention, that the processor 902 is configured to determine whether another data packet belonging to a session to which the data packet belongs has been received includes:

parsing a flag field carried in the data packet; determining whether the flag field is an SYN flag field; and when the flag field is the SYN flag field, determining that another data packet belonging to the session to which the data packet belongs has not been received; or when the flag field is not the SYN flag field, determining that another data packet belonging to the session to which the data packet belongs has been received.

In another embodiment provided in this embodiment of the present invention, that the processor 902 is configured to determine whether another data packet belonging to whether a session to which the data packet belongs has been received includes:

determining whether the quintuple information of the data packet matches a second mapping table, where the second mapping table stores quintuple information of all sessions that are received before the data packet is received or a Bloom Filter mapping element that uses, as an input, quintuple information of all sessions that are received before the data packet is received; and when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

In another embodiment provided in this embodiment of the present invention, the first mapping table stores the Bloom Filter mapping element that uses, as an input, the quintuple information of all the to-be-sampled sessions that are recognized before the data packet is received.

That the processor 902 is configured to determine whether the quintuple information of the data packet matches the first mapping table includes:

using, as a first hash value group, multiple hash values that are calculated by using a preset hash function group and by using, as an input, the quintuple information that is of the data packet and arranged in a preset order, where the preset hash function group is a hash function group used when the first mapping table is generated, and includes multiple preset hash functions;
querying whether values at positions in the first mapping table that are corresponding to all hash values in the first hash value group are 1; and
when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;
querying, from the first mapping table, whether values at positions corresponding to all hash values in the second hash value group are 1; and
when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

In another embodiment provided in this embodiment of the present invention, the first mapping table stores the Bloom Filter mapping element that uses, as an input, the quintuple information of all the to-be-sampled sessions that are recognized before the data packet is received.

That the processor 902 is configured to update a first mapping table by using the quintuple information of the data packet includes:

using, as a third hash value group, multiple hash values that are calculated by using the preset hash function group and by using, as an input, the quintuple information that is of the data packet and arranged in the preset order; and setting values at positions in the first mapping table that are corresponding to all hash values in the third hash value group to 1.

The data packet extraction apparatus shown in FIG. 9 is an apparatus corresponding to the data packet extraction method shown in FIG. 3. For a specific implementation manner, refer to the description in the data packet extraction method shown in FIG. 3. Details are not described herein again.

Optionally, the processor may be a central processing unit (Central Processing Unit, CPU), the memory may be an internal memory of a random access memory (Random Access Memory, RAM) type, the receiver and the transmitter may include a common physical interface, and the physical interface may be an Ethernet (Ethernet) interface or an asynchronous transfer mode (Asynchronous Transfer Mode, ATM) interface. The processor, the transmitter, the receiver, and the memory may be integrated into one or more independent circuits or one or more pieces of hardware, for example, an application-specific integrated circuit (Application Specific Integrated Circuit, ASIC).

Persons of ordinary skill in the art may understand that all or some of the steps in the method embodiments may be implemented by program instructing relevant hardware. The foregoing program may be stored in a computer readable storage medium. When the program runs, the steps included in the method embodiments are performed. The foregoing storage medium may be at least one of the following media: media that can store program code, such as a read-only memory (Read-Only Memory, ROM), a RAM, a magnetic disk, or an optical disc.

It should be noted that the embodiments in this specification are all described in a progressive manner. For same or similar parts in the embodiments, reference may be made to these embodiments, and each embodiment focuses on a difference from other embodiments. Especially, device and system embodiments are basically similar to method embodiments, and therefore are described briefly. For related parts, reference may be made to partial descriptions in the method embodiments. The described device and system embodiments are merely examples. The units described as separate parts may or may not be physically separate, and parts displayed as units may or may not be physical units, may be located in one position, or may be distributed on multiple network units. Some or all of the modules may be selected according to actual needs to achieve the objectives of the solutions of the embodiments. Persons of ordinary skill in the art may understand and implement the embodiments of the present invention without creative efforts.

The foregoing descriptions are merely preferred implementation manners of the present invention, but are not intended to limit the protection scope of the present invention. It should be noted that persons of ordinary skill in the art may make improvements and polishing without departing from the principle of the present invention and the improvements and polishing shall fall within the protection scope of the present invention.

**Claims**

1. A data packet extraction method, wherein the method comprises:

   receiving a data packet;
   parsing quintuple information of the data packet;
   calculating a first hash value and a second hash value of the data packet according to the quintuple information by using a first hash function, wherein the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source Internet Protocol IP address and a destination IP address are interchanged and a source port number and a destination port number are interchanged;
   calculating a first remainder obtained by dividing the first hash value by a denominator of a preset session sampling ratio, and calculating a second remainder obtained by dividing the second hash value by the denominator of the preset session sampling ratio;
   querying whether the first remainder or the second remainder is a preset sampling remainder, wherein a quantity of the preset sampling remainders is the same as a numerator value of the preset sampling ratio; and
   extracting the data packet when the first remainder or the second remainder is the preset sampling remainder.

2. The method according to claim 1, before the extracting the data packet, further comprising:

   extracting at least one preset feature field from the data packet, wherein the preset feature field is a character string of a preset offset length at a preset position in the data packet;
   calculating a feature hash value of each preset feature field by using the second hash function and by using the preset feature field as an input;
   querying whether the feature hash value of each preset feature field is the same as a preset hash value of the preset feature field; and
   extracting the data packet when the feature hash value of each preset feature field is the same as the preset hash value of the preset feature field.

3. A data packet extraction method, wherein the method comprises:

   receiving a data packet;
   parsing quintuple information of the data packet;
   determining whether another data packet belonging to a session to which the data packet belongs has been received; and

when another data packet belonging to the session to which the data packet belongs has not been received, determining that the session to which the data packet belongs is a newly received session, adding 1 to a session count value, and determining whether the session count value is equal to a preset threshold; and when the session count value is equal to the preset threshold, determining that the data packet belongs to a newly recognized to-be-sampled session, extracting the data packet, and updating a first mapping table by using the quintuple information of the data packet; or when another data packet belonging to the session to which the data packet belongs has been received, determining that the session to which the data packet belongs is a received session, and determining whether the quintuple information of the data packet matches the first mapping table; and extracting the data packet when the quintuple information of the data packet matches the first mapping table, wherein the first mapping table stores quintuple information of all to-be-sampled sessions that are recognized before the data packet is received or a Bloom Filter mapping element that uses, as an input, quintuple information of all to-be-sampled sessions that are recognized before the data packet is received.

4. The method according to claim 3, wherein the determining whether another data packet belonging to a session to which the data packet belongs has been received, comprises:

parsing a flag field carried in the data packet;
determining whether the flag field is an SYN flag field; and
when the flag field is the SYN flag field, determining that another data packet belonging to the session to which the data packet belongs has not been received; or when the flag field is not the SYN flag field, determining that another data packet belonging to the session to which the data packet belongs has been received.

5. The method according to claim 3, wherein the determining whether another data packet belonging to a session to which the data packet belongs has been received, comprises:

determining whether the quintuple information of the data packet matches a second mapping table, wherein the second mapping table stores quintuple information of all sessions that are received before the data packet is received or a Bloom Filter mapping element that uses, as an input, quintuple information of all sessions that are received before the data packet is received; and
when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

6. The method according to any one of claims 3 to 5, wherein:

the first mapping table stores the Bloom Filter mapping element that uses, as an input, the quintuple information of all the to-be-sampled sessions that are recognized before the data packet is received; and
the determining whether the quintuple information of the data packet matches the first mapping table comprises:

using, as a first hash value group, multiple hash values that are calculated by using a preset hash function group and by using, as an input, the quintuple information that is of the data packet and arranged in a preset order, wherein the preset hash function group is a hash function group used when the first mapping table is generated, and comprises multiple preset hash functions;
querying whether values at positions in the first mapping table that are corresponding to all hash values in the first hash value group are 1; and
when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;
querying, from the first mapping table, whether values at positions corresponding to all hash values in the second hash value group are 1; and

when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

7. The method according to any one of claims 3 to 6, wherein:

the first mapping table stores the Bloom Filter mapping element that uses, as an input, the quintuple information of all the to-be-sampled sessions that are recognized before the data packet is received; and
the updating a first mapping table by using the quintuple information of the data packet comprises:

using, as a third hash value group, multiple hash values that are calculated by using the preset hash function group and by using, as an input, the quintuple information that is of the data packet and arranged in the preset order; and
setting values at positions in the first mapping table that are corresponding to all hash values in the third hash value group to 1.

8. A data packet extraction apparatus, wherein the apparatus comprises:

a receiving unit and a processing unit connected to the receiving unit, wherein
the receiving unit is configured to receive a data packet and send the data packet to the processing unit; and
the processing unit is configured to: parse quintuple information of the data packet;
calculate a first hash value and a second hash value of the data packet according to the quintuple information by using a first hash function, wherein the first hash value is a hash value that is calculated by using the first hash function and by using the quintuple information arranged in a preset order as an input, and the second hash value is a hash value that is calculated by using the first hash function and by using, as an input, quintuple information obtained after in the quintuple information arranged in the preset order, a source IP address and a destination IP address are interchanged and a source port number and a destination port number are interchanged;
calculate a first remainder obtained by dividing the first hash value by a denominator of a preset session sampling ratio, and calculate a second remainder obtained by dividing the second hash value by the denominator of the preset session sampling ratio;
query whether the first remainder or the second remainder is a preset sampling remainder, wherein a quantity of the preset sampling remainders is the same as a numerator value of the preset sampling ratio; and
extract the data packet when the first remainder or the second remainder is the preset sampling remainder.

9. The apparatus according to claim 8, wherein:

before extracting the data packet, the processing unit is further configured to:

extract at least one preset feature field from the data packet, wherein the preset feature field is a character string of a preset offset length at a preset position in the data packet;
calculate a feature hash value of each preset feature field by using the second hash function and by using the preset feature field as an input;
query whether the feature hash value of each preset feature field is the same as a preset hash value of the preset feature field; and
extract the data packet when the feature hash value of each preset feature field is the same as the preset hash value of the preset feature field.

10. A data packet extraction apparatus, wherein the apparatus comprises:

a receiving unit and a processing unit connected to the receiving unit, wherein
the receiving unit is configured to receive a data packet and send the data packet to the processing unit; and
the processing unit is configured to: parse quintuple information of the data packet;
determine whether another data packet belonging to a session to which the data packet belongs has been received; and
when another data packet belonging to the session to which the data packet belongs has not been received, determine that the session to which the data packet belongs is a newly received session, add 1 to a session count value, and determine whether the session count value is equal to a preset threshold; and when the session count value is equal to the preset threshold, determine that the data packet belongs to a newly recognized to-be-sampled session, extract the data packet, and update a first mapping table by using the quintuple information of the data packet; or when another data packet belonging to the session to which the data packet belongs has been received, determine that the session to which the data packet belongs is a received session, and determine whether the quintuple information of the data packet matches the first mapping table; and extract the data packet when the quintuple information of the data packet matches the first mapping table, wherein the first mapping table stores quintuple information of all to-be-sampled sessions that are recognized before the data packet is received or a Bloom Filter mapping element that uses, as an input, quintuple information of all to-be-sampled sessions that are recognized before the data packet is received.

11. The apparatus according to claim 10, wherein that the processing unit is configured to determine whether another data packet belonging to a session to which the data packet belongs has been received, comprising:

> parsing a flag field carried in the data packet;
> determining whether the flag field is an SYN flag field; and
> when the flag field is the SYN flag field, determining that another data packet belonging to the session to which the data packet belongs has not been received; or when the flag field is not the SYN flag field, determining that another data packet belonging to the session to which the data packet belongs has been received.

12. The apparatus according to claim 10, wherein that the processing unit is configured to determine whether another data packet belonging to a session to which the data packet belongs has been received, comprising:

> determining whether the quintuple information of the data packet matches a second mapping table, wherein the second mapping table stores quintuple information of all sessions that are received before the data packet is received or a Bloom Filter mapping element that uses, as an input, quintuple information of all sessions that are received before the data packet is received; and
> when the quintuple information of the data packet does not match the second mapping table, determining that another data packet belonging to the session to which the data packet belongs has not been received, and updating the second mapping table by using the quintuple information of the data packet; or when the quintuple information of the data packet matches the second mapping table, determining that another data packet belonging to the session to which the data packet belongs has been received.

13. The apparatus according to any one of claims 10 to 12, wherein:

> the first mapping table stores the Bloom Filter mapping element that uses, as an input, the quintuple information of all the to-be-sampled sessions that are recognized before the data packet is received; and
> that the processing unit is configured to determine whether the quintuple information of the data packet matches the first mapping table, comprising:

>> using, as a first hash value group, multiple hash values that are calculated by using a preset hash function group and by using, as an input, the quintuple information that is of the data packet and arranged in a preset order, wherein the preset hash function group is a hash function group used when the first mapping table is generated, and comprises multiple preset hash functions;
>> querying whether values at positions in the first mapping table that are corresponding to all hash values in the first hash value group are 1; and
>> when the values at the positions in the first mapping table that are corresponding to all the hash values in the first hash value group are 1, determining that the quintuple information of the data packet matches the first mapping table; or when not all the values at the positions in the first mapping table that are corresponding to all the hash values in the first hash value group are 1, using, as a second hash value group, multiple hash values that are calculated by using the preset hash function group and by using, as an input, quintuple information obtained after in the quintuple information that is of the data packet and arranged in the preset order, a position of a source IP address and a position of a destination IP address are interchanged and a position of a source port number and a position of a destination port number are interchanged;
>> querying, from the first mapping table, whether values at positions corresponding to all hash values in the second hash value group are 1; and
>> when the values at the positions in the first mapping table that are corresponding to all the hash values in the second hash value group are 1, determining that the quintuple information of the data packet matches the first mapping table; or when not all the values at the positions in the first mapping table that are corresponding to all the hash values in the second hash value group are 1, determining that the quintuple information of the data packet does not match the first mapping table.

14. The method according to any one of claims 10 to 13, wherein:

the first mapping table stores the Bloom Filter mapping element that uses, as an input, the quintuple information of all the to-be-sampled sessions that are recognized before the data packet is received; and that the processing unit is configured to update a first mapping table by using the quintuple information of the data packet, comprising:

using, as a third hash value group, multiple hash values that are calculated by using the preset hash function group and by using, as an input, the quintuple information that is of the data packet and arranged in the preset order; and

setting values at positions in the first mapping table that are corresponding to all hash values in the third hash value group to 1.

| | |
|---|---|
| Receive a data packet | 101 |

↓

| | |
|---|---|
| Parse quintuple information of the data packet | 102 |

↓

| | |
|---|---|
| Calculate a first hash value of the data packet and a second hash value of the data packet according to the quintuple information by using a first hash function | 103 |

↓

| | |
|---|---|
| Calculate a first remainder obtained by dividing the first hash value by a denominator of a preset session sampling ratio, and calculate a second remainder obtained by dividing the second hash value by the denominator of the preset session sampling ratio | 104 |

↓

| | |
|---|---|
| Query whether the first remainder or the second remainder is a preset sampling remainder, where a quantity of the preset sampling remainders is the same as a numerator value of the preset sampling ratio | 105 |

↓

| | |
|---|---|
| Extract the data packet when the first remainder or the second remainder is the preset sampling remainder | 106 |

FIG. 1

| | Preset hash value P1 | | Preset hash value P2 | Preset hash value P3 | | | |
|---|---|---|---|---|---|---|---|
| | Feature field 1 | | Feature field 2 | Feature field 3 | | | |

FIG. 2

Receive a data packet — 301

Parse quintuple information of the data packet — 302

Determine whether another data packet belonging to a session to which the data packet belongs has been received — 303

No

Yes

Determine that the session to which the data packet belongs is a newly received session, add 1 to a session count value, and determine whether the session count value is equal to a preset threshold — 304

No

Determine that the session to which the data packet belongs is a received session, and determine whether the quintuple information of the data packet matches the first mapping table — 306

No

Yes — 305

Determine that the data packet belongs to a newly recognized to-be-sampled session, extract the data packet, and update a first mapping table by using the quintuple information of the data packet

Yes — 307

Extract the data packet

FIG. 3

| 0 | 0 | 0 | 0 | 0 | 0 | 0 | 0 | 0 | 0 | 0 | 0 |
|---|---|---|---|---|---|---|---|---|---|---|---|

FIG. 4(a)

$X_1$     $X_2$     ...

| 0 | 1 | 0 | 0 | 1 | 0 | 1 | 0 | 1 | 0 | 1 | 0 |
|---|---|---|---|---|---|---|---|---|---|---|---|

FIG. 4(b)

$P_F$

FIG. 5

| 601 | 602 |
|---|---|
| Receiving unit | Processing unit |

FIG. 6

| 701 | 702 |
|---|---|
| Receiving unit | Processing unit |

FIG. 7

801

Memory

803

Processor

802

Receiver

FIG. 8

901

Memory

903

Processor

902

Receiver

FIG. 9

## INTERNATIONAL SEARCH REPORT

| International application No. |
|---|
| **PCT/CN2014/095639** |

### A. CLASSIFICATION OF SUBJECT MATTER

H04L 29/06 (2006.01) i

According to International Patent Classification (IPC) or to both national classification and IPC

### B. FIELDS SEARCHED

Minimum documentation searched (classification system followed by classification symbols)

H04L; G06F; H04W

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: data flow, data packet, quintuple, packet, flow, sample, extract, hash, analysis, ratio

### C. DOCUMENTS CONSIDERED TO BE RELEVANT

| Category* | Citation of document, with indication, where appropriate, of the relevant passages | Relevant to claim No. |
|---|---|---|
| A | US 2010161791 A1 (AT & T INTELLECTUAL PROPERTY I. L. P.), 24 June 2010 (24.06.2010), description, paragraphs [0020]-[0025], figure 2, and abstract | 1-2, 8-9 |
| A | US 7957396 B1 (JUNIPER NETWORKS INC.), 07 June 2011 (07.06.2011), the whole document | 1-2, 8-9 |
| A | CN 101656677 A (HANGZHOU DPTECH TECHNOLOGIES CO., LTD.), 24 February 2010 (24.02.2010), the whole document | 1-2, 8-9 |
| A | CN 103368952 A (BAIDU ONLINE NETWORK TECHNOLOGY BEIJING CO., LTD.), 23 October 2013 (23.10.2013), description, paragraphs [0026]-[0037] | 3-7, 10-14 |
| A | CN 101051958 A (BEIJING UNIVERSITY OF TECHNOLOGY), 10 October 2007 (10.10.2007), the whole document | 3-7, 10-14 |
| A | CN 101707619 A (RUIJIE NETWORKS CO., LTD.), 12 May 2010 (12.05.2010), the whole document | 3-7, 10-14 |

☐ Further documents are listed in the continuation of Box C.     ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 September 2015 (06.09.2015) | **25 September 2015 (25.09.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **BAI, Xuehui** Telephone No.: (86-10) **62413394** |

Form PCT/ISA/210 (second sheet) (July 2009)

## INTERNATIONAL SEARCH REPORT
### Information on patent family members

International application No.

**PCT/CN2014/095639**

| Patent Documents referred in the Report | Publication Date | Patent Family | Publication Date |
|---|---|---|---|
| US 2010161791 A1 | 24 June 2010 | US 7957315 B2 | 07 June 2011 |
| US 7957396 B1 | 07 June 2011 | US 2011206049 A1 | 25 August 2011 |
| | | US 8761182 B2 | 24 June 2014 |
| CN 101656677 A | 24 February 2010 | CN 101656677 B | 16 November 2011 |
| CN 103368952 A | 23 October 2013 | None | |
| CN 101051958 A | 10 October 2007 | CN 100446486 C | 24 December 2008 |
| CN 101707619 A | 12 May 2010 | CN 101707619 B | 21 November 2012 |

Form PCT/ISA/210 (patent family annex) (July 2009)